# EUROPÄISCHE PATENTSCHRIFT

(11) **EP 0 400 452 B1**
(45) Veröffentlichungstag und Bekanntmachung des Hinweises auf die Patenterteilung: **19.01.1994**
(21) Anmeldenummer: 90109651.1
(22) Anmeldetag: 21.05.1990
(51) Int. Cl.: B60R 1/06

(54) **Fahrzeugaussenspiegel mit einem motorisch schwenkbaren Spiegelgehäuse**
Vehicle exterior mirror with a motor powered folding mirror casing
Rétroviseur de véhicule à boîtier de miroir rabattable par moteur

(30) Priorität: 29.05.1989 DE 8906557 U; 26.10.1989 DE 3935632
(43) Veröffentlichungstag der Anmeldung: 05.12.1990
(73) Patentinhaber: HOHE KG, D-97903 Collenberg (DE)
(72) Erfinder: Polzer, Herwig, D-8760 Miltenberg (DE); Seitz, Edwin, D-6985 Neuenbuch (DE)
(74) Vertreter: Zinngrebe, Horst, Dr.rer.nat.

(56) Entgegenhaltungen:
- EP-A- 0 018 297
- EP-A- 0 220 606
- DE-U- 8 802 473
- US-A- 4 893 916

## Beschreibung

Die Erfindung betrifft einen Fahrzeugaußenspiegel mit einem an einer Fahrzeugkarosserie befestigbaren Spiegelfuß und einem am Spiegelfuß gehaltenen Spiegelgehäuse, welches mittels eines Elektromotors relativ zum Spiegelfuß schwenkbar ist. Ein solcher Fahrzeugaußenspiegel ist zum Beispiel aus EP-A-146 888 bekannt.

Aus der deutschen Patentschrift DE-A-3 538 159 ist ein Außenspiegel für Nutzfahrzeuge bekannt, dessen Spiegelgehäuse an einem an der Karosserie des Fahrzeugs befestigten Spiegelfuß gehalten ist. Am Spiegelfuß ist ein vom Fahrer elektrisch betätigbarer Elektromotor befestigt, der über eine Kupplung wirkungsmäßig mit dem Spiegelgehäuse gekoppelt ist und bei Aktivierung das Spiegelgehäuse an die Fahrzeugkarosserie heranschwenkt oder das herangeschwenkte Spiegelgehäuse wieder in die Gebrauchslage ausschwenkt.

Der Elektromotor ist außen am Spiegelfuß befestigt und muß daher zum Schutz wetterfest eingekapselt sein. Nachteilig ist nicht nur die Notwendigkeit der hermetischen Einkapselung des Motors, sondern vor allem der durch seine Größe beziehungsweise der Größe seines ihn umschließenden Gehäuses bedingte erhöhte Luftwiderstand, der in ungünstigen Einbaulagen während der Fahrt zu Windgeräuschen Anlaß geben kann.

Es sind daher zahlreiche Versuche unternommen worden, den Schwenkmotor unsichtbar in den Außenspiegel zu integrieren. So zeigt beispielsweise die veröffentlichte europäische Patentanmeldung EP-A-146 888, daß der im Spiegelgehäuse nahe dessen Klappachse untergebrachte Schwenkmotor über ein Getriebe auf ein mit dem Spiegelfuß drehfestes Ritzel arbeitet. Hierbei ist es jedoch erforderlich, daß vom Spiegelfuß ein Arm seitlich vorsteht, der den spiegefußnahen Teil des Spiegelgehäuses unterfaßt und mit diesem über einen das Ritzel tragenden Bolzen verbunden ist. Bei anderen Halterungen des Spiegelgehäuses am Spiegelfuß, beispielsweise über zwei in Fahrtrichtung beabstandete Wälzlager oder mittels Schwingen, ist der in der letztgenannten Druckschrift beschriebene Einbau eines Schwenkmotors für das Spiegelgehäuse nicht möglich. Darüber hinaus stört der Einbau des Schwenkmotors im Spiegelgehäuse die Verlegung von Übertragungsorganen beispielsweise in Form von Bowdenzügen zur mechanischen Verstellung eines im Spiegelgehäuse beherbergten Spiegelglases.

Der Erfindung liegt daher die Aufgabe zugrunde, einen Fahrzeugaußenspiegel mit einem Schwenkmotor für das Spiegelgehäuse zu versehen, der über die Außenkontur des Außenspiegels nicht vorsteht und universell für Außenspiegel unterschiedlicher Befestigungsart des Spiegelgehäuses am Spiegelfuß eingesetzt werden kann.

Die Lösung der gestellten Aufgabe gelingt nach der Erfindung dadurch, daß der Schwenkmotor an der Innenseite einer den Spiegelfuß nach außen begrenzenden Platte befestigt ist und daß die Abtriebswelle des Schwenkmotors, gegebenenfalls über ein Getriebe und/oder eine Kupplung, mit einem Exzenter drehfest verbunden ist, in welchen ein mit dem Spiegelgehäuse gekoppeltes starres Übertragungsglied eingehängt ist. Alternativ kann der Schwenkmotor im Inneren des Spiegelgehäuses befestigt sein, wobei das in den Exzenter des Schwenkmotors eingehängte Übertragungsglied mit dem Spiegelfuß gekoppelt ist. Die Erfindung erlaubt die Integration des Schwenkmotors in die unveränderte, übliche Außenkontur des Außenspiegels und ist für alle Befestigungsarten des Spiegelgehäuses am Spiegelfuß einsetzbar.

Eine besondere Raumersparnis für den Schwenkmotor ergibt sich bei einer Weiterbildung der Erfindung, gemäß welcher der Schwenkmotor an der Innenseite einer Montageplatte des Spiegelfusses befestigt ist, so daß der Schwenkmotor durch eine Öffnung im Außenblech der Fahrzeugkarosserie hindurch sich in einen sonst ungenutzten Raum hinein erstrecken kann.

Wenn das Spiegelgehäuse mittels einer kräftigen Zugfeder am Spiegelfuß in Gebrauchslage gehalten ist, wird das vom Schwenkmotor zum Abschwenken aufzubringende Drehmoment nach einer Weiterbildung der Erfindung reduziert, gemäß welcher das Übertragungsglied mit einem freien Ende eines am Spiegelfuß angelenkten Schwenkhebels gekoppelt ist und die Halteöse zweischen der Anlenkung des Übertragungsgliedes und der Anlenkung des Schwenkhebels ausgebildet ist.

Die Kopplung des Übertragungsgliedes mit dem Spiegelgehause kann dann vorteilhafterweise eine an dem Schwenkhebel ausgebildete Kulisse aufweisen, gegen welche ein spiegelgehäusefester Bauteil, beispielsweise ein auf einer Halteplatte für das Spiegelglas stehender Bolzen, anliegen kann.

Ist das Spiegelgehäuse mit einer weiteren Zugfeder, die zur ersten Zugfeder sich im wesetnlichem parallel erstreckt, am Spiegelfuß befestigt, empfliehlt es sich, diese an einem Haltebügel am Spiegelfuß einzuhängen, an welchem sich ihr spiegelfußnahes Ende während der Schwenkbewegung des Spiegelgehäuses zweckmäßig entlang bewegen kann.

Schließlich kann in Weiterbildung der Erfindung die Schwenkendlage des Spiegelgehäuses durch den Hinterschnitt eines am Schwenkhebel ausgebildeten Hakens definiert sein, gegen welchen ein spiegelgehäusesfestes Bauteil, beispielsweise ein aus einer Halteplatte vorstehenden Zapfen, anlaufen kann.

Im übrigen sind vorteilhafte Ausgestaltungen der Erfindung in den Unteransprüchen angegeben.

Die Erfindung wird nachstehend anhand des in der beigefügten Zeichnung dargestellten Ausführungsbeispiels im einzelnen beschrieben. Es zeigen:

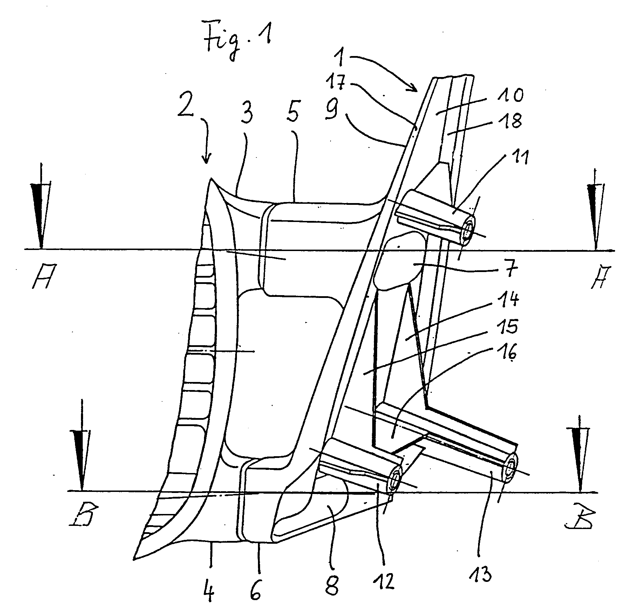

- Fig. 1: eine schematische perspektivische Teilansicht eines Außenspiegels mit Spiegelfuß und Spiegelgehäuse in Gebrauchslage;
- Fig. 2: einen Schnitt durch den Außenspiegel längs der Linie A-A aus Fig. 2;
- Fig. 3: einen Schnitt durch den Außenspiegel längs der Linie B-B in Fig. 1,
- Fig. 4: eine der Fig. 2 ähnliche Darstellung, wobei das Spiegelgehäuse jedoch nach hinten teilweise abgeschwenkt ist; und
- Fig. 5: eine der Fig. 3 ähnliche Darstellung, wobei das Spiegelgehäuse jedoch nach hinten abgeschwenkt ist.
- Fig. 6: eine der Fig. 2 ähnliche Darstellung einer zweiten Ausführungsform; und
- Fig. 7: eine der Fig. 4 ähnliche Darstellung für die zweite Ausführungsform.

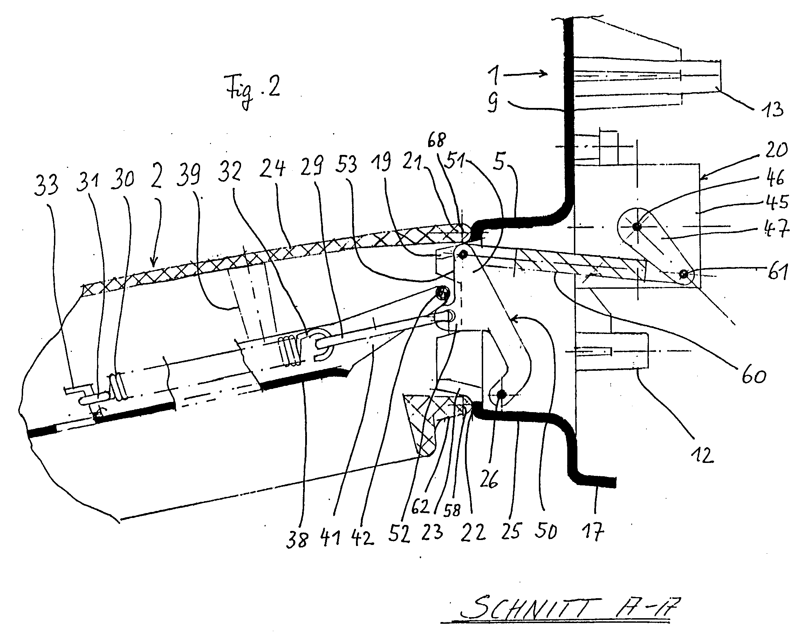

Die Erfindung wird nachstehend an einem Außenspiegel beschrieben, dessen Außenkontur etwa der aus der deutschen Gebrauchsmusterschrift DE-U-88 02 473.3 bekannten Form entspricht. So weist der Außenspiegel einen im ganzen mit 1 bezeichneten Spiegelfuß und ein Spiegelgehäuse 2 auf, welches sich über einen oberen Ansatz 3 und einen unteren Ansatz 4 auf einem oberen Fußteil 5 beziehungsweise einem unteren Fußteil 6 abstützt. Die Ansätze 3, 4 und Fußteile 5, 6 sind hohl ausgebildet und haben quer zur Ebene der Figur 2 einen im wesentlichen rechteckigen Querschnitt, so daß sich nicht dargestellte mechanische oder elektrische Betätigungsorgane für einen ebenfalls nicht dargestellten, in üblicherweise im Spiegelgehäuse 2 gehaltenen Rückspiegel durch einen oder beide Ansätze 3, 4 und Fußteile 5, 6 sowie mit letzteren korrespondierende Öffnungen 7, 8 im Spiegelfuß 1 erstrecken können.

Der Spiegelfuß 1 weist eine Montageplatte 9 auf, aus deren Außenseite das obere Fußteil 5 und das untere Fußteil 6 nach außen vorstehend herausgeformt sind. Aus der Innenseite 10 der Montageplatte 9 stehen drei Montagezapfen 11, 12, 13 vor, mit welchen der Außenspiegel an einer nicht dargestellten Fahrzeugkarosserie, beispielsweise dem Fensterdreieck der Fahrertür oder dem Türblech der Fahrertür in üblicher Weise befestigt werden kann. Dabei sind der obere Montagezapfen 11 oberhalb der oberen Öffnung 7 und die beiden unteren Montagezapfen 12, 13 dicht oberhalb der unteren Öffnung 8 aus der Montageplatte 9 ausgeformt. Dadurch entsteht zwischen der unteren Kante der oberen Öffnung 7 und den beiden unteren Montagezapfen 12, 13 ein durch zwei gegenüberliegende Seitenwände 14, 15 und eine Bodenplatte 16 gebildeter Montageraum, in welchem ein Schwenkmotor 20 untergebracht und befestigt werden kann. Die beispielsweise dreieckigen Seitenwände 14, 15 sind mit der Innenseite 10 sowie mit jeweils einem der Montagezapfen 12, 13 verbunden und die Bodenplatte 16 erstreckt sich zwischen den Montagezapfen 12, 13. Die Montageplatte 9 weist einen schmalen einwärts umgebogenen Rand 17, 18 auf, der nach dem Anbau des Außenspiegels an die Fahrzeugkarosserie gegebenenfalls über einen nicht dargestellten elastischen Dichtstreifen an der Außenseite des Karossierbleches anliegt. Das Karosserieblech besitzt für den Durchtritt der Montagezapfen 11, 12, 13 sowie im Bereich des erwähnten Montageraums Ausschnitte, so daß der im Montageraum untergebrachte Schwenkmotor 20 teilweise von den Rändern 17, 18 umfaßt vor dem Karosseriebereich und teilweise letzteres durchdringend in der Türfüllung angeordnet ist.

Gemäß Fig. 2 weist das obere Fußteil 5 einen umlaufenden, einwärts versetzten Hals 19 auf, so daß der ballig geformte Rand 21 des oberen Ansatzes 3 in Gebrauchslage des Spiegelgehäuses 2 auf einer umlaufenden Schulter 22 den Hals 19 umfassend aufliegen kann. Im hinteren Teil des Halses 19 ist ein Ausschnitt 23 vorgesehen, dessen Bedeutung noch erläutert wird.

Das Spiegelgehäuse 2 wird in Gebrauchslage durch zwei kräftige im wesentlichen parallele Zugfedern, nämlich eine obere Zugfeder 30 und eine untere Zugfeder 34 gehalten. Das spiegelfußferne Ende 31 der oberen Zugfeder ist in einen Nippel 33 einer steifen Halteplatte 38 eingehängt, welche auf aus dem Spiegelgehäuseboden vorstehenden Böcken 39, 40 aufgeschraubt oder aufgenietet ist. Die obere Zugfeder 30 erstreckt sich zwischen Spiegelgehäuseboden 24 und Rückseite der Halteplatte 38 in Höhe des oberen Ansatzes 3. Ihr spiegelfußnahes Ende 32 ist in ein starres Zwischenglied 29 eingehängt, welches in einer Öse 52 eines Hebels 50 in der Nähe des Halses 19 schwenkbar verankert ist. Die Halteplatte 38 trägt auf ihrer der Zugfeder 30 gegenüberliegenden Vorderseite den nicht dargestellten Rückspiegel und dessen nicht dargestellten Verstellmechanismus.

Der Hebel 50 ist in der Nähe einer bezüglich der Fahrtrichtung des Fahrzeugs hinteren Wand 25 des oberen Fußteils 5 im Inneren desselben in solcher Weise auf einem Zapfen 26 schwenkbar gelagert, daß sich der Hebel 50 bei an das Fahrzeug anmontiertem Außenspiegel im wesentlichen horizontal erstreckt und in einer horizontalen Ebene um den Zapfen 26 schwenken kann.

Das dem Schwenkzapfen 26 gegenüberliegende Ende 51 des Hebels 50 ist an das freie Ende eines stangenformigen Übertragungsgliedes 60 angelenkt und befindet sich bei der in Fig. 2 dargestellten Gebrauchslage des Spiegelgehäuses 2 innerhalb des Halses 19, wobei das Gelenk praktisch in der durch die vordere Schwenkachse 68 und die hintere Schwenkachse 58 verlaufenden Ebene liegt. Die Öse 52 ist an einem mittleren Teil zwischen dem Ende 51 des Hebels 50 und dem Schwenkzapfen 26 ausgebildet und erstreckt sich auf das Innere des Spiegelgehäuses 2 zu. Man erkennt, daß sich die Wirklinie der von Zugfeder 30 entwickelten Kraft horizontal durch den oberen Ansatz 3 und das obere Fußteil 5 erstreckt.

An die Halteplatte 38 ist ein in Richtung auf den Hebel 50 vorstehender Arm 41 angeformt, welcher kurz vor und unterhalb einer zwischen Öse 52 und Ende 51 ausgebildeten freien Kante 53 am Hebel 50 endet und dort einen festen, aufrechtstehenden, die Kante 53 hinreichend überragenden Bolzen 42 trägt.

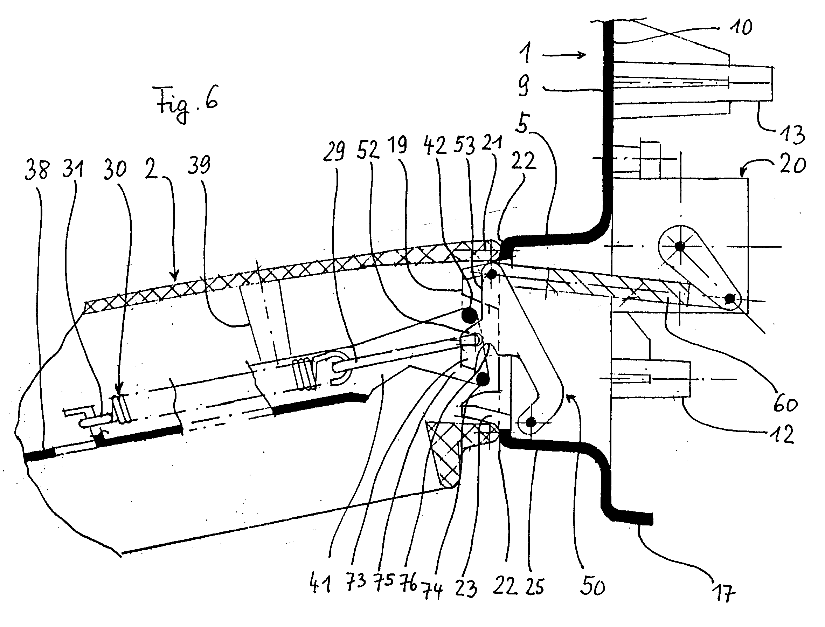

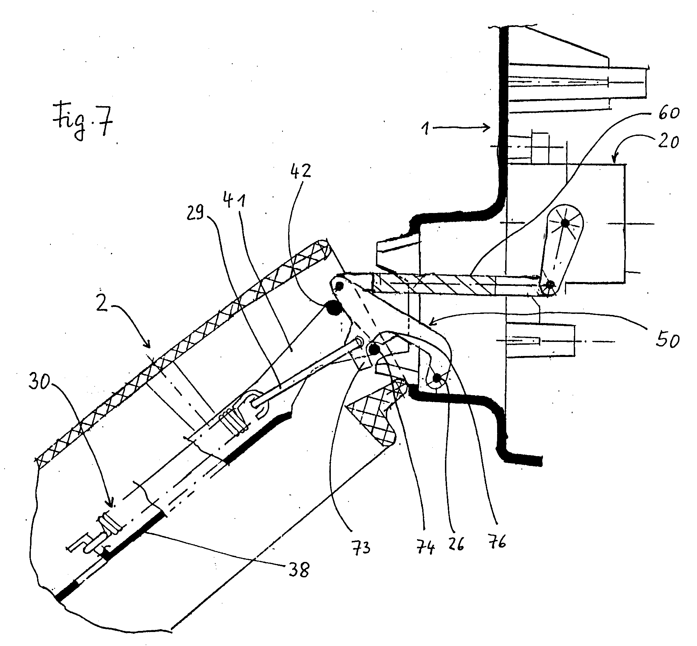

Bei der in Fig. 6 und 7 dargestellten Ausführungsform ist die Öse 52 zu einem Haken 73 verlängert, hinter welchen ein zweiter Bolzen 74 greifen kann. Der zweite Bolzen 74 sitzt auf einer rückwärtigen Verbreiterung 75 des Armes 41 und ist dort so angeordnet, daß in Gebrauchslage der Haken 73 zwischen den beiden Bolzen 42 und 74 hindurchgreift. Wenn bei Abschwenken des Spiegelgehäuses 2 aus der Gebrauchslage (Fig. 6) nach inten der Bolzen 74 gegen eine Auskehlung 76 des Hebels 50 hinter dem Haken 73 anläuft, nimmt das Spiegelgehäuse 2 seine hintere Schwenkendlage ein, die Fig. 7 zeigt.

Der in einem Gehäuse 45 eingeschlossene Schwenkmotor 20 kann mit einem im Gehäuse 45 untergebrachten Untersetzungsgetriebe sowie mit einer Kupplung ausgerüstet sein, welche etwa gemäß veröffentlichter europäischer Patentanmeldung 169 245 bei etwa durch einen Stoß auf das Spiegelgehäuse 2 verursachtem Überschreiten eines vorgegebenen Drehmometen-Grenzwertes die Abtriebswelle des Schwenkmotors 20 von einer Bewegung des Übertragungsgliedes 60 antriebsmäßig entkoppelt. Für den hier beschriebenen Außenspiegel ist eine derartige Kupplung jedoch nicht erforderlich. Eine aus dem Gehäuse 45 vorstehende Antriebswelle 46 ist drehfest mit einem Exzenter 47 verbunden, dessen freies Ende an das dem Ende 51 gegenüberliegende freie Ende des Übertragungsgliedes 60 angelenkt ist. Dabei erstreckt sich die Verbindungslinie von der Antriebswelle 46 zum Gelenk 61 des Exzenters 47 mit Übertragungsglied 60 bei der in Fig. 2 dargestellten Gebrauchslage des Spiegelgehäuses von letzterem weg. Es versteht sich hiernach, daß sich das Übertragungsglied 60 durch das Innere des oberen Fußteils 5 erstreckt, und daß der Schwenkmotor 20 mit Gehäuse 45 so im Montageraum befestigt ist, daß sich das Übertragungsglied 60 im wesentlichen horizontal erstrecken kann, wenn der Außenspiegel am Fahrzeug befestigt ist.

Das spiegelfußferne Ende der unteren Zugfeder 34 ist in einen aus der Rückseite der Halteplatte 38 vorstehenden unteren Nippel 36 eingehängt, und das spiegelfußnahe Ende 37 der unteren Zugfeder 34 ist in ein unteres Zwischenglied 43 eingehängt. Das spiegelfußnahe Ende des unteren Zwischengliedes 43 hintergreift einen hakenförmig gebogenen Stahlfederbügel 44 und sitzt in Gebrauchslage des Spiegelgehäuses 2 in einem Winkel 48 des Bügels 44. Die gegenüberliegenden Enden des Bügels 44 sind an einem Zapfen 49 beziehungsweise an einem Vorsprung 54 verankert, die im Inneren eines Halses 55 des unteren Fußteils 6 ausgebildet sind. Der Hals 55 besitzt hinten einen Ausschnitt 56 und ist insgesamt einwärtsversetzt, so daß sich eine umlaufende Ringschulter 56 ergibt, auf welcher das ballige Ende 57 des unteren Ansatzes 4, den Hals 55 umfassend, ruht. Man erkennt, daß die Wirklinie der von der unteren Zugfeder 34 entwickelten Kraft sich durch den unteren Ansatz 4 und den Hals des unteren Fußteils 6 erstreckt.

Das motorische Einschwenken des Spiegelgehäuses 2 nach rückwärts gegen die Fahrzeugkarosserie geschieht auf folgende Weise:

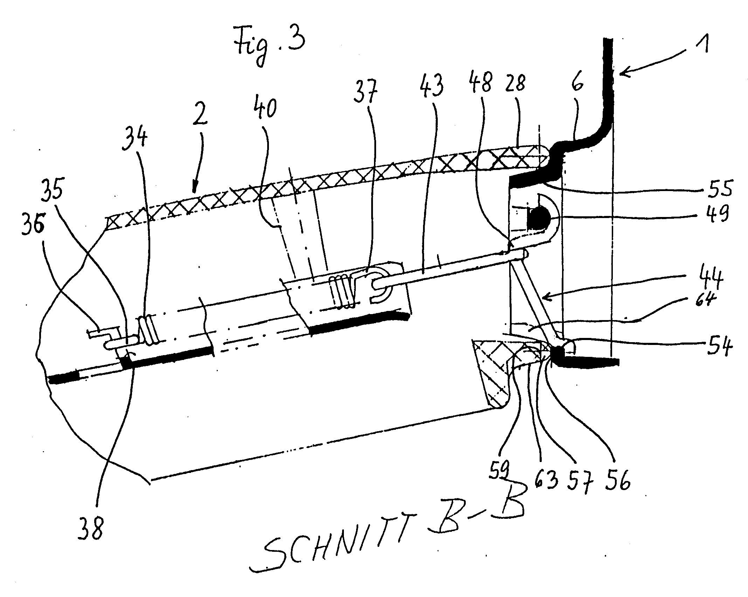

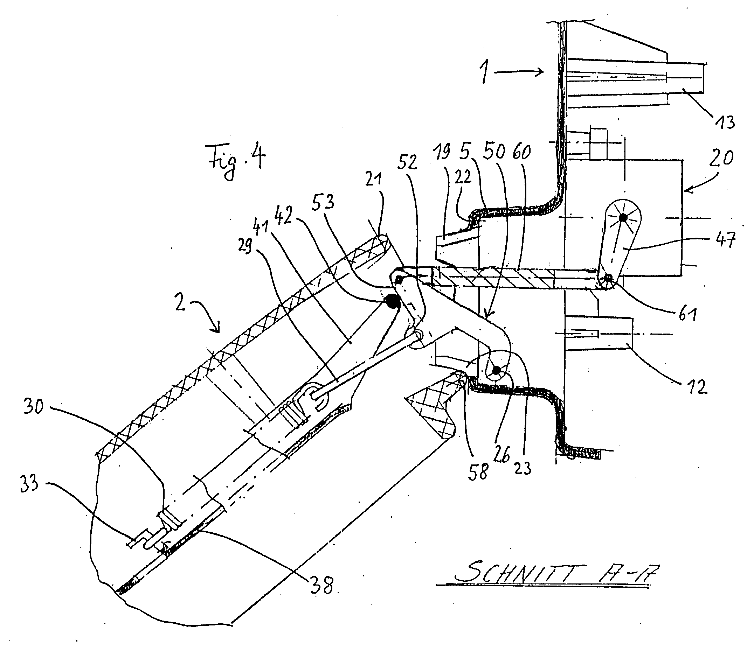

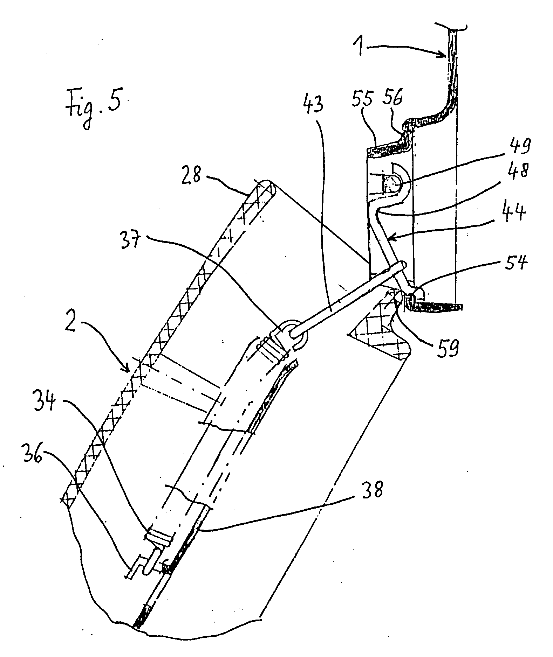

Wenn der Schwenkmotor 20 über nicht dargestellte elektrische Leitungen und einen etwa am Armaturenbrett des Fahrzeugs vorgesehenen Schalter mit der Batterie des Fahrzeuges verbunden ist und der Fahrer durch Betätigung des Schalters den Schwenkmotor aktiviert, dreht sich die Antriebswelle 46 bei der in Fig. 2 gewählten Darstellung im Sinne des Uhrzeigers mit der Folge, daß der Exzenter 47 das Übertragungsglied 60 in Fig. 2 nach links bewegt. Diese Bewegung wird in eine nach links gerichtete Schwenkbewegung des Hebels 50 um den Zapfen 26 übertragen. Die mit dem Hebel 50 verbundene Öse 52 bewegt sich ebenfalls nach links, so daß die obere Zugfeder 30 solange zunehmend entspannt wird, bis die durch die Kante 53 gebildete Kulisse des Hebels 50 gegen den Bolzen 42 zur Anlage kommt. Die fortgesetzte Drehung der Antriebswelle 46 bewirkt jetzt, daß der Hebel 50 die Halteplatte 38 und das mit dieser verbundene Spiegelgehäuse 2 bezüglich der Fahrtrichtung des Fahrzeuges nach hinten aus der in den Fig. 2 und 3 dargestellten Gebrauchslage abschwenkt, wobei das Spiegelgehäuse 2 um den hinteren Rand des oberen Ansatzes 3 sowie des unteren Ansatzes 4 schwenkt. Die gegen den Zapfen 26 nach außen verlagerte Schwenkachse des Spiegelgehäuses 2 erstreckt sich durch die Mitten 58, 59 der balligen Konturen der geraden hinteren Abschnitte 62, 63 der Ränder 21 und 28 des oberen Ansatzes 3 beziehungsweise des unteren Ansatzes 4. Bei dieser Schwenkbewegung muß der Schwenkmotor die Zugkraft nur der unteren Zugfeder 34 überwinden, da die Öse 52 an der Schwenkbewegung des Hebels 50 teilnimmt. Bei der Schwenkbewegung rutscht das fußseitige Ende des unteren Zwischengliedes 43 längs des Stahlfederbügels 44 nach hinten, so daß die dadurch bedingte Rückwärtsverlagerung des Angriffspunktes der unteren Zugfeder 34 das von der unteren Zugfeder 34 aufgrund deren Zugkraft entwickelte Rückstell-Drehmoment mindert. Die rückwärtige Schwenkbewegung des Spiegelgehäuses 2 schreitet mit weiterer Drehung der Antriebswelle 46 fort, bis die Wirklinie der Zugkraft der oberen Zugfeder 30 die Achse des Zapfens 26 nach hinten passiert. Dabei können der Hebel in den Ausschnitt 23 und das Zwischenglied 43 in den Ausschnitt 64 im Hals 55 eintauchen. Hiernach wirkt das von der oberen Zugfeder 30 ausgeübte Drehmoment im Sinne einer weiteren Abschwenkbewegung des Spiegelgehäuses 2 auf die Fahrzeugkarosserie zu, was zu einer Minderung des vom Schwenkmotor 20 aufzubringenden Drehmoments führt. Die Abschwenkbewegung endet bei der Ausführungsform gemäß Fig. 2 bis 5, wenn die Verbindungslinie der beiden Gelenke des Übertragungsgliedes 60 durch die Antriebsachse 46 verläuft und bei der Ausführungsform gemäß Fig. 6 und 7 bereits dann, wenn der Zapfen 74 gegen die Auskehlung 76 anläuft. Nicht dargestellte Mittel können vorgesehen sein, die dann ein Stillsetzen des Schwenkmotors 20 bewirken.

Wird der Schwenkmotor 20 in umgekehrtem Drehsinn aktiviert, führt die umgekehrte Drehung der Antriebswelle 46 das abgeschwenkte Spiegelgehäuse 2 wieder in die Gebrauchslage zurück, wobei die vorstehend erläuterten einzelnen Phasen der Schwenkbewegung rückwärts durchlaufen werden.

Wenn auf das in Gebrauchslage befindliche Spiegelgehäuse 2 ein nach rückwärts oder vorwärts gerichteter Schlag ausgeübt wird, kann das Spiegelgehäuse bei nicht aktiviertem Schwenkmotor 20 diesem Schlag nach rückwarts (um die Schwenkachse) oder vorwärts ausweichen, wobei der Schwenkhebel 50 in der in Fig. 2 dargestellten Position verbleibt und die obere Zugfeder 30 sowie die untere Zugfeder 34 in üblicher Weise gespannt werden und das Spiegelgehäuse bei Beendigung des Schlages wieder in die Gebrauchslage zuruckführen.

Es liegt im Rahmen der Erfindung, statt der Zugfeder 30, 34 Druckfedern zu verwenden, deren spiegelfußnahen Ende am Spiegelgehäuse abgestützt ist und deren spiegelfußfernes Ende in eine die Druckfeder durchsetzendes, am Spiegelfuß in der Halteöse 52 bzw. dem Haltebügel 44 befestigtes Organ eingehängt ist.

## Patentansprüche

1. Außenspiegel für ein Fahrzeug mit einem an einer Fahrzeugkarosserie befestigbaren Spiegelfuß (1) und einem am Spiegefuß gehaltenen Spiegelgehäuse (2), welches mittels eines Elektromotors (20) relativ zum Spiegelfuß schwenkbar ist, dadurch gekennzeichnet, daß der Schwenkmotor (20) an der Innenseite (10) einer den Spiegelfuß (1) nach außen begrenzenden Platte befestigt ist und daß die Abtriebswelle des Schwenkmotors (20), gegebenenfalls über ein Getriebe und/oder eine Kupplung, mit einem Exzenter (47) drehfest verbunden ist, in welchen ein mit dem Spiegelgehäuse (2) gekoppeltes starres Übertragungsglied (60) eingehängt ist.

2. Außenspiegel für ein Fahrzeug mit einem an einer Fahrzeugkarosserie befestigbaren Spiegelfuß (1) und einem am Spiegelfuß gehaltenen Spiegelgehäuse (2), welches mittels eines Elektromotors (20) relativ zum Spiegelfuß verschwenkbar ist, dadurch gekennzeichnet, daß der Schwenkmotor (20) im Inneren des Spiegelgehäuses (2) befestigt ist, und daß die Abtriebswelle des Schwenkmotors (20), gegebenenfalls über ein Getriebe und/oder eine Kupplung, mit einem Exzenter (47) drehfest verbunden ist, in welchen ein mit dem Spiegelfuß (1) gekoppeltes starres Übertragungsglied (60) eingehängt ist.

3. Außenspiegel nach Anspruch 1, dadurch gekennzeichnet, daß der Schwenkmotor (20) an der Innenseite (10) einer Montageplatte (9) des Spiegelfusses (1) befestigt ist.

4. Außenspiegel nach einem der vorstehenden Ansprüche, dadurch gekennzeichnet, daß in dem Spiegelgehäuse (2) eine Zugfeder (30) befestigt ist, deren spiegelfußnahes Ende (32) an einer am Spiegelfuß (1) angelenkten Halteöse (52) verankert ist, an welcher das Übertragungsglied (60) angreift.

5. Außenspiegel nach Anspruch 4, dadurch gekennzeichnet, daß die Halteöse (52) an einem Schwenkhebel (50) ausgebildet ist, der im Spiegelfuß (1) schwenkbar (bei 26) gelagert ist.

6. Außenspiegel nach Anspruch 4 oder 5, dadurch gekennzeichnet, daß das Übertragungsglied (60) an dem Schwenkhebel (50) angelenkt ist.

7. Außenspiegel nach Anspruch 5 oder 6, dadurch gekennzeichnet, daß die Halteöse (52) zwischen der Anlenkung des Übertragungsgliedes (60) und der Anlenkung (26) des Schwenkhebels (50) ausgebildet ist.

8. Außenspiegel nach einem der Ansprüche 4 bis 7, dadurch gekennzeichnet, daß der Schwenkhebel (50) eine Kulisse (53) für einen spiegelgehäuseseitigen Anschlag (42) aufweist, welche vorzugsweise zwischen der Halteöse (52) und der Anlenkung des Übertragungsgliedes (60) ausgebildet ist.

9. Außenspiegel nach Anspruch 8, dadurch gekennzeichnet, daß an einem zum Spiegelfuß (1) verlängerten Arm (41) einer mit dem Spiegelgehäuse (2) fest verbundenen Halteplatte (38) der Anschlagszapfen (52) ausgebildet ist.

10. Außenspiegel nach einem der vorstehenden Ansprüche, dadurch gekennzeichnet, daß aus dem Spiegelfuß (1) wenigstens ein Fußteil (5) zum Spiegelgehäuse (2) vorsteht, wobei das Fußteil (5) in einem einwärts versetzten Hals (19) ausläuft und der spiegelfußseitige Spiegelgehäuserand (21) sich auf einer den Hals (19) umgebenden Ringschulter (22) abstützt.

11. Außenspiegel nach einem der vorstehenden Ansprüche, dadurch gekennzeichnet, daß in dem Spiegelgehäuse (2) zwei sich im wesentlichen parallel erstreckende Zugfedern (30, 34) verankert sind, wobei eine der beiden Zugfedern (30) in die Halteöse (52) eingehängt ist und die andere Zugfeder (34) einen im Spiegelfuß (1) verankerten Haltebügel (44) hintergreift.

12. Außenspiegel nach einem der vorstehenden Ansprüche, dadurch gekennzeichnet, daß aus dem Spiegelfuß zwei übereinander angeordnete Fußteile (5, 6) vorstehen, wobei sich die Halteöse (52) in einem der beiden Fußteile (5) und der Haltebügel (44) im anderen Fußteil (6) erstreckt.

13. Außenspiegel nach Anspruch 11 oder 12, dadurch gekennzeichnet, daß das spiegelfußseitige Ende (37) der mit dem Haltebügel (44) gekoppelten Zugfeder (34) längs des Haltebügels (44) verschiebbar ist.

14. Außenspiegel nach einem der sorstehenden Ansprüche, dadurch gekennzeichnet, daß am Spiegelfuß (1) oder am Spiegelgehäuse (2) ein Haken (73) ausgebildet ist, gegen dessen Hinterschnitt (76) ein am Spiegelgehäuse (2) oder Spiegelfuß (1) vorgesehener Zapfen (74) zur Schaffung einer definierten Schwenkendlage des Spiegelgehäuses (2) anlaufen kann.

15. Außenspiegel nach Anspruch 14, dadurch gekennzeichnet, daß der Haken (73) als Verlängerung der Halteöse (52) ausgebildet ist und der Zapfen (74) derart auf dem Arm (41) befestigt ist, daß der Haken (73) in Gebrauchslage zwischen Anschlag (42) und Zapfen (74) hindurchgreift.

## Claims

1. An external mirror for a vehicle, having a base (1), securable to the bodywork of the vehicle, and a casing (2), held on the mirror base and pivotable relative to the mirror base by means of an electric motor (20), **characterized in that** the pivoting motor (20) is secured to the inside (10) of a plate bounding the mirror base (1) on the outside, and the driven shaft of the pivoting motor (20) is connected rotationally rigidly, where appropriate by way of a gear mechanism and/or a coupling, to an eccentric (47) in which a rigid transmission member (60) connected to the mirror casing (2) is suspended.

2. An external mirror for a vehicle, having a base (1), securable to the bodywork of the vehicle, and a casing (2), held on the mirror base and pivotable relative to the mirror base by means of an electric motor (20), **characterized in that** the pivoting motor (20) is secured in the interior of the mirror casing (2), and the driven shaft of the pivoting motor (20) is connected rotationally rigidly, where appropriate by way of a gear mechanism and/or a coupling, to an eccentric (47) in which a rigid transmission member (60) connected to the mirror base (1) is suspended.

3. An external mirror according to Claim 1, **characterized in that** the pivoting motor (20) is secured to the inside of an assembly plate (9) of the mirror base (1).

4. An external mirror according to one of the preceding Claims, **characterized in that** a tension spring (30) is secured in the mirror casing (2), the end (32) of the tension spring (30) close to the mirror base being anchored to a retaining lug (52) which is articulated to the mirror base (1) and on which the transmission member (60) engages.

5. An external mirror according to Claim 4, **characterized in that** the retaining lug (52) is formed on a pivoting lever (50) mounted pivotably (at 26) in the mirror base (1).

6. An external mirror according to Claim 4 or 5, **characterized in that** the transmission member (60) is articulated to the pivoting lever (50).

7. An external mirror according to Claim 5 or 6, **characterized in that** the retaining lug (52) is formed between the articulation of the transmission member (60) and the articulation (26) of the pivoting lever (50).

8. An external mirror according to one of Claims 4 to 7, **characterized in that** the pivoting lever (50) has a slotted link (53) for a stop (42) situated on the mirror casing and preferably formed between the retaining lug (52) and the articulation of the transmission member (60).

9. An external mirror according to Claim 8, **characterized in that** the stop pin (52 [*sic* -*recte* 42]) is formed on an arm (41) - extended towards the mirror base (1) - of a retaining plate (38) securely connected to the mirror casing (2).

10. An external mirror according to one of the preceding Claims, **characterized in that** at least one base part (5) projects from the mirror base (1) towards the mirror casing (2), the base part (5) terminating in an inwardly offset neck (19) and the edge (21) of the mirror casing on the base being supported on an annular shoulder (22) surrounding the neck (19).

11. An external mirror according to one of the preceding Claims, **characterized in that** two tension spring (30, 34) extending substantially parallel are anchored in the mirror casing (2), one of the two tension springs (30) being attached to the retaining lug (52) and the other tension spring (34) engaging behind a retaining bracket (44) anchored in the mirror base (1).

12. An external mirror according to one of the preceding Claims, **characterized in that** two base parts (5, 6) arranged one above the other project from the mirror base, the retaining lug (52) extending in one of the two base parts (5) and the retaining bracket (44) extending in the other base part (6).

13. An external mirror according to Claim 11 or 12, **characterized in that** the end (37) - on the mirror base - of the tension spring (34) connected to the retaining bracket (44) is displaceable along the retaining bracket (44).

14. An external mirror according to one of the preceding Claims, **characterized in that** a hook (73) is formed on the mirror base (1) or on the mirror casing (2), a pin (74) provided on the mirror casing (2) or the mirror base (1) being adapted to run up against the undercutting (76) of the said hook (73) in order to provide a defined end position of the pivoting of the mirror casing (2).

15. An external mirror according to Claim 14, **characterized in that** the hook (73) is constructed as an extension of the retaining lug (52), and the pin (74) is secured to the arm (41) in such a way that the hook (73) engages through between the stop (42) and the pin (74) in the position of use.

## Revendications

1. Rétroviseur extérieur pour un véhicule avec un support de rétroviseur (1) pouvant être fixé sur une carrosserie de véhicule et un corps de rétroviseur (2) maintenu sur le support de rétroviseur, lequel est pivotant au moyen d'un moteur électrique (20) par rapport au support de rétroviseur, caractérisé en ce que le moteur de pivotement (20) est fixé sur le côté intérieur (10) d'une plaque délimitant le support de rétroviseur (1) vers l'extérieur et en ce que l'arbre mené du moteur de pivotement (20) est relié stationnaire en rotation, le cas échéant par l'intermédiaire d'un engrenage et/ou d'un accouplement, à un excentrique (47) dans lequel est accroché un organe de transmission (60) rigide couplé au corps de rétroviseur (2).

2. Rétroviseur extérieur pour un véhicule avec un support de rétroviseur (1) pouvant être fixé à une carrosserie de véhicule et un corps de rétroviseur (2) maintenu sur le support de rétroviseur, lequel est pivotant par rapport au support de rétroviseur au moyen d'un moteur électrique (20), caractérisé en ce que le moteur de pivotement (20) est fixé à l'intérieur du corps de rétroviseur (2) et en ce que l'arbre mené du moteur de pivotement (20) est relié stationnaire en rotation, le cas échéant par l'intermédiaire d'un engrenage et/ou d'un accouplement, à un excentrique (47) dans lequel est accroché un organe de transmission (60) rigide couplé au support de rétroviseur (1).

3. Rétroviseur extérieur selon la revendication 1, caractérisé en ce que le moteur de pivotement (20) est fixé sur le côté intérieur (10) d'une plaque de montage (9) du support de rétroviseur (1).

4. Rétroviseur extérieur selon l'une des revendications précédentes, caractérisé en ce qu'un ressort de traction (30) est fixé dans le corps de rétroviseur (2), dont l'extrémité (32) proche du support de rétroviseur est ancrée sur un oeillet de retenue (52) articulé au support de rétroviseur (1), sur lequel s'engage l'organe de transmission (60).

5. Rétroviseur extérieur selon la revendication 4, caractérisé en ce que l'oeillet de retenue (52) est formé sur un levier pivotant (50) qui est monté pivotant (en 26) dans le support de rétroviseur (1).

6. Rétroviseur extérieur selon la revendication 4 ou 5, caractérisé en ce que l'organe de transmission (60) est articulé à un levier pivotant (50).

7. Rétroviseur extérieur selon la revendication 5 ou 6, caractérisé en ce que l'oeillet de retenue (52) est formé entre l'articulation de l'organe de transmission (60) et l'articulation (26) du levier pivotant (50).

8. Rétroviseur extérieur selon l'une des revendications 4 à 7, caractérisé en ce que le levier pivotant (50) présente une coulisse (53) pour une butée (42) du côté du corps de rétroviseur, laquelle est formée de préférence entre l'oeillet de retenue (52) et l'articulation de l'organe de transmission (60).

9. Rétroviseur extérieur selon la revendication 8, caractérisé en ce que le tenon de butée (52) est formé sur un bras (41) prolongé vers le support de rétroviseur (1) d'une plaque de retenue (38) reliée fixe au corps de rétroviseur (2).

10. Rétroviseur extérieur selon l'une des revendications précédentes, caractérisé en ce qu'au moins une partie de support (5) saille du support de rétroviseur (1) vers le corps de rétroviseur (2), la partie de support (5) se terminant dans un col (19) décalé vers l'intérieur et le bord de corps de rétroviseur (21) du côté du support de rétroviseur s'appuyant sur un épaulement annulaire (22) entourant le col (19).

11. Rétroviseur extérieur selon l'une des revendications précédentes, caractérisé en ce que dans le corps de rétroviseur (2) deux ressorts de traction (30, 34) s'étendant pour l'essentiel parallèles sont ancrés, l'un des deux ressorts de traction (30) étant accroché dans l'oeillet de retenue (52) et l'autre ressort de traction (34) engageant par derrière un étrier de retenue (44) ancré dans le support de rétroviseur (1).

12. Rétroviseur extérieur selon l'une des revendications précédentes, caractérisé en ce que deux parties de support (5, 6) disposées l'une au-dessus de l'autre saillent du support de rétroviseur, l'oeillet de retenue (52) s'étendant dans l'une des deux parties de support (5) et l'étrier de retenue (44) dans l'autre partie de support (6).

13. Rétroviseur extérieur selon la revendication 11 ou 12, caractérisé en ce que l'extrémité (37) du côté du support de rétroviseur du ressort de traction (34) couplé à l'étrier de retenue (44) est coulissante le long de l'étrier de retenue (44).

14. Rétroviseur extérieur selon l'une des revendications précédentes, caractérisé en ce que sur le support de rétroviseur (1) ou sur le corps de rétroviseur (2) est formé un crochet (73) contre la contre-dépouille (76) duquel un tenon (74) prévu sur le corps de rétroviseur (2) ou le support de rétroviseur (1) peut débuter pour la création d'une position extrême de pivotement définie du corps de rétroviseur (2).

15. Rétroviseur extérieur selon la revendication 14, caractérisé en ce que le crochet (73) est formé comme prolongement de l'oeillet de retenue (52) et le tenon (74) est fixé sur le bras (41) de telle sorte qu'en position d'utilisation le crochet (73) s'engage entre butée (42) et tenon (74).
